# EUROPEAN PATENT APPLICATION

(11) **EP 2 119 561 A1**
(43) Date of publication of application: **18.11.2009**
(21) Application number: 08704525.8
(22) Date of filing: 07.02.2008
(51) Int. Cl.: B32B 7/06, B32B 27/00, B32B 27/30, B65D 33/00, B65D 33/22, B65D 33/25

(54) **MULTILAYER TAPE, ITS MANUFACTURING METHOD, AND PACKAGING BAG**

(30) Priority: 08.03.2007 JP 2007059065
(71) Applicant: Idemitsu Unitech Co. Ltd., Tokyo 104-0033 (JP)
(72) Inventor: YASUIKE, Tetsuro, Sodegaura-shi Chiba 299-0205 (JP); GOTO, Shuichi, Tokyo 104-0033 (JP); TANAKA, Kenichi, Sodegaura-shi Chiba 299-0205 (JP); KATADA, Ryo, Sodegaura-shi Chiba 299-0205 (JP); NANBA, Yoshinori, Sodegaura-shi Chiba 299-0205 (JP)
(74) Representative: Skone James, Robert Edmund
(86) International application number: PCT/JP2008/052032
(87) International publication number: WO 2008/108135

(57) **Abstract**

In cross section of the multilayered tape 2A, the first surface layer 21 has nonuniform thickness in a width direction of the multilayered tape 2A. The first surface layer 21 includes thin portions 211 and 212 at its ends and a thick portion 213 interposed between the thin portions 211 and 212. These thin portions 211 and 212 and thick portion 213 provide a projection. The thin portions 211 and 212 are easily split or peeled, and the thick portion 213 is not easily split or peeled. The intermediate layer 23 adjacent to the first surface layer 21 is a recess to be fitted to the projection.

## Description

### Technical Field

The present invention relates to a multilayered tape, a manufacturing method thereof, and a packaging bag.

### Background Art

Foods and medicines are packaged in thermoformed containers or soft packaging bags to be stored. These packaging bodies containing contents are retort-sterilized depending on intended purposes to be transported to various regions. The packaging bodies are required to have internal pressure strength such that the packaging bodies are not broken during the retort-sterilization and transportation, and are also required to have easy-openability when being opened.
Accordingly, there has been a demand for a packaging body having both the sealing performance and easy-openability. For example, Patent Document 1 discloses that a packaging bag in which an intermediate material is inserted between a plurality of laminated layers is sealed. According to patent Document 1, positions where first and second surfaces of the intermediate material are respectively sealed to an inner surface of the packaging bag are displaced from each other (i.e., the surfaces of the intermediate material are sealed at different positions) to exhibit easy-openability, and an end of the intermediate material close to contents extend toward the contents further than the sealing positions to exhibit pressure resistance.

[Patent Document 1] JP-A-01-294466

### Disclosure of the Invention

### Problems to Be Solved by the Invention

However, in order to produce the packaging bag disclosed in Patent Document 1, more than one step are required for shifting the sealing positions of the surfaces of the intermediate material, thus leading to complicated manufacturing process. Also, since the sealing positions are not shifted from each other when sealing accuracy is low, easy-openability and pressure resistance may not be obtained.
Further, resin used for the innermost layer of the intermediate material may be eluted to the contents since the innermost layer is exposed to the side close to the contents. Accordingly, materials used for the innermost layer are limited. Furthermore, sealing strength of a boundary between the intermediate material and sealing portion is low and pinholes are easily generated.

In a packaging bag with a fastener tape used for packaging liquid, the fastener tape is contaminated by the liquid.

An object of the invention is to provide a multilayered tape having excellent pressure resistance and easy-openability, which can be manufactured in a simple manufacturing process to reduce manufacturing cost, a manufacturing method thereof, and a packaging bag.

### Means for Solving the Problems

According to an aspect of the invention, a multilayered tape, in which a plurality of layers are layered, sealed between inner surfaces of a packaging body to provide a seal portion includes: at least two layers of a first surface layer and a second surface layer to provide a surface of the multilayered tape, where either one of the first surface layer and the second surface layer has nonuniform thickness in a cross sectional direction of the multilayered tape at the seal portion and has a portion that is easily split or peeled and a portion that is not easily split or peeled, and the surface of the multilayered tape is approximately flat at the seal portion.

According to the aspect of the invention, the multilayered tape includes the plurality of layers, and is sealed between the inner surfaces of the packaging body to provide the seal portion.
Either one of the first surface layer and the second surface layer that provide the surface of the multilayered tape has nonuniform thickness and has the portion that is easily split or peeled and the portion that is not easily split or peeled.
The portion that is easily split or peeled indicates a portion that is easily split or a portion that is easily peeled depending on the profile of the surface layer. Similarly, the portion that is not easily split or peeled indicates a portion that is not easily split or a portion that is not easily peeled depending on the profile of the surface layer.
For example, when the surface layer has a thin portion, the surface layer is easily started to be split from the thin portion, so that the thin portion is the portion that is easily split. When the boundary between the surface layer and another layer is provided on the surface of the multilayered tape, the multilayered tape is easily started to be peeled at the boundary, so that the boundary is the portion that is easily peeled.

Because the multilayered tape has such portions, the thickness of each layer is not uniform and irregular in cross section of the multilayered tape. Because the surface of the multilayered tape is approximately flat, the boundary between the surface layer and the layer adjacent to the surface layer is irregular. For example, when the multilayered tape has a two-layered structure, the first surface layer and the second surface layer that provide the surface of the multilayered tape are adjacent to each other. Accordingly, the boundary between the first surface layer and the second surface layer is irregular. When the multilayered tape has a three-layered structure, a boundary surface between one of the first and second surface layers and a layer adjacent to the one of the surface layers is irregular.
As described above, since one of the first and second surface layers includes the portion that is easily split or peeled, the multilayered tape is easily split or peeled at such a portion. Accordingly, easy-openability of the packaging body with which the multilayered tape is attached can be realized.

In the multilayered tape according to the aspect of the invention, it is preferable that the portion that is easily split or peeled is thin and the portion that is not easily split or peeled is thick.
Since the portion that is easily split or peeled of the surface layers is thin according to the above arrangement, the multilayered tape is easily started to be split at such a portion and thus excellent easy-openability can be exhibited.
Also, since the portion that is not easily split or peeled is thick, the multilayered tape is not easily split at such a portion. When such a portion is provided at a position where stress is focused on the content-side of the packaging body, the multilayered tape is not easily split, thus maintaining sealing performance of the packaging body.

In the multilayered tape according to the aspect of the invention, it is preferable that the portion that is easily split or peeled is provided at a boundary between the one of the first and second surface layers and a layer adjacent to the one of the first and second surface layers.
According to the above arrangement, the portion that is easily split or peeled is provided at the boundary between the surface layer and the layer adjacent to the surface layer. It is required that the boundary is provided on the surface of the multilayered tape and is included in the seal portion when the multilayered tape and a packaging bag are attached. Since adhesion strength is high between the packaging bag and the multilayered tape and is low between the layers of the multilayered tape, the multilayered tape is easily split when the packaging body is opened. When the boundary is provided at two positions, the multilayered tape is started to be split from the opening-side of the packaging body and is peeled at the content-side of the packaging body. Thus, excellent easy-openability can be exhibited.

In the multilayered tape according to the aspect of the invention, the seal portion includes an opening-side end that is in contact with the portion that is easily split or peeled and a content-side end that is in contact with the portion that is not easily split or peeled.
According to the above arrangement, when the multilayered tape is attached to the packaging body, the multilayered tape is sealed such that the opening-side end of the seal portion is in contact with the portion that is easily split or peeled and the content-side end of the seal portion is in contact with the portion that is not easily split or peeled.
Here, the packaging bag is started to be opened from the opening-side end of the seal portion where the strongest stress is applied in opening. Also, the content-side end of the seal portion is where the stress from the inside of the packaging bag is the most concentrated.
Since the portion that is easily split or peeled is in contact with the portion where the stress is applied in opening (the opening-side end of the seal portion), this portion is easily split or peeled and thus easy-openability can be exhibited. Since the portion that is not easily split or peeled is in contact with the portion where the stress is applied from the inside (the content-side end of the seal portion), this portion is not easily split or peeled and thus sealing performance and pressure resistance can be exhibited.

In the multilayered tape according to the aspect of the invention, it is preferable that an intermediate layer made of resin different from resin used for the first surface layer and the second surface layer is provided between the first surface layer and the second surface layer.
The intermediate layer may include one layer or plural layers. The layers of the multilayered tape may be made of various polyolefins. For example, one or combination of two or more of homo-polypropylene (HPP), random-polypropylene (RPP), block-polypropylene (BPP), low-density polyethylene (LDPE), linear low-density polyethylene (LLDPE) and high-density polyethylene (HDPE) may be used. Three layers of the multilayered tape may be made of different polyolefins (three-kinds and three-layered structure). Alternatively, the first surface layer that is the outermost layer and the second surface layer may be made of the same polyolefin and the intermediate layer may be made of different polyolefin (two-kinds and three-layered structure).

Further, the first surface layer and the second surface layer may be made of different polyolefins (two-kinds and two-layered structure). Examples of the two-kinds and two-layered structure may include RPP/LDPE and RPP/HDPE.

Examples of the three-kinds and three-layered structure may be: HPP/LDPE or HDPE or LLDPE/RPP; BPP/mixture of HPP and LDPE/RPP; BPP/mixture of HPP and LDPE and HDPE/RPP; LLDPE/HPP or BPP or RPP/HDPE; LDPE/HPP or BPP or RPP/HDPE; and LDPE/RPP/LLDPE.

Examples of the two-kinds and three-layered structure may be: HPP/LDPE or HDPE or LLDPE/HPP; BPP/LDPE or HDPE or LLDPE/BPP; RPP/LDPE or HDPE or LLDPE/RPP; HPP/mixture of HPP and LDPE/HPP; BPP/mixture of HPP and LDPE/BPP; RPP/mixture of HPP and LDPE/RPP; RPP/mixture of HPP and LDPE and HDPE/RPP; LLDPE/HPP or BPP or RPP/LLDPE; and HDPE/HPP or BPP or RPP/HDPE.
EPR or styrene elastomer may be added to the above-described resins. Then, the packaging body can be opened with the enhanced openability.

When the adjacent layers are made of different resins, the layers can be easily split at the boundary therebetween. Especially, when combination of resins having relatively low adhesion strength is used for the surface layer having the thin portion out of the first and second surface layers and the layer adjacent to the surface layer, the layers are more easily split and thus easy-openability can be enhanced. By selecting the combination of resins, a surface to be split can be provided at a desired position.

In the multilayered tape according to the aspect of the invention, it is preferable that the intermediate layer is made of adhesive resin mainly composed of styrene elastomer, tackifier resin and plasticizer.
The styrene elastomer is rubber block copolymer containing styrene block and diene block. Examples of the rubber block copolymer containing styrene block and diene block are: block copolymer in which polystyrene block and vinyl-polyisoprene block are bonded; block copolymer in which polystyrene block and ethylene-propylene block are bonded; and block copolymer in which polystyrene block and ethylene-ethylene-propylene block are bonded.
The tackifier resin is resin that improves adherence. Examples of the tackifier resin are: hydrogenated rosin resin, terpene resin, hydrogenated terpene resin, C5/C6 aliphatic petroleum resin, and alicyclic petroleum resin.
Examples of the plasticizer that improves flexibility and processability are liquid paraffin, process oil (aromatic, naphthenic or paraffinic petroleum hydrocarbon) and synthetic wax.
According to the above arrangement, since the intermediate layer is made of the adhesive resin, the adhesive resin is exposed when the multilayered tape is split between either one of the first and second surface layers and the intermediate layer, and the exposed portion can be re-sealed. Accordingly, a packaging body that can be re-sealed can be provided by attaching the above-described multilayered tape.
Also, since the adhesion resin mainly containing styrene elastomer, tackifier resin and plasticizer is used, less smell is emitted and re-adhesion strength is high.

In the multilayered tape according to the aspect of the invention, it is preferable that an end of the intermediate layer is not exposed to the content-side in cross section of the multilayered tape when the multilayered tape is attached to a packaging body.
According to the above arrangement, the end of the intermediate layer is not exposed to the content-side of the packaging body when the multilayered tape is attached to the packaging body. More specifically, the intermediate layer is covered by the first and second surface layers at the content-side of the packaging body and thus resin used for the intermediate layer is not eluted to the content-side. Accordingly, selection of resins is not limited. Even when adhesive resin is used for the intermediate layer, sanitary and safe condition can be kept.
Further, contents are not seep into the layers of the multilayered tape and therefore the adhesion strength at the boundary is not lowered. Especially, the above arrangement can be advantageous when acrid contents are packaged.

The multilayered tape preferably includes a fastener tape including a pair of a male member and a female member each of which is connected to a belt-shaped base, and is preferably connected to either one of the pair of the male member and the female member.
The multilayered tape according to the aspect of the invention is integrated with the belt-shaped bases of the fastener tape. The multilayered tape is welded on the inner surface of the packaging body such that the fastener tape is provided at the opening-side and the multilayered portion is provided at the content-side. Accordingly, the contents and the fastener tape are separated by the multilayered tape, so that the contents are not adhered to the engagement portion of the fastener tape and are not leaked to the outside. Especially, the above arrangement can be advantageous when liquid is packaged.

According to another aspect of the invention, a manufacturing method of the multilayered tape as described above includes manufacturing the multilayered tape by deformed co-extrusion.
The multilayered tape having the two-kinds and two-layered structure, three-kinds and three-layered structure or three-kinds and four-layered structure as described above, or the multilayered tape integrated with the fastener tape can be produced in a single step by molding resins used for the layers by a deformed die.

According to still another aspect of the invention, a packaging body on which the multilayered tape according to any one of claims 1 to 8 is attached to the inner surfaces of the packaging body, the inner surfaces opposite to each other.
Since the above multilayered tape is attached to the inner surfaces of the packaging body, the packaging body that attains the above-described advantages can be provided.

In the packaging body according to the still another aspect of the invention, it is preferable that a fastener tape is attached to the inner surfaces closer to an opening-side than the multilayered tape is.
By attaching the fastener tape to the packaging bag with which only the multilayered tape is attached, the same advantages can be attained as in the packaging body with which the multilayered tape integrated with the fastener tape is attached.

### Brief Description of Drawings

Fig. 1 is a front view showing a packaging bag according to a first exemplary embodiment of the invention.
Fig. 2 is a cross section taken along II-II line in Fig. 1 according to the first exemplary embodiment.
Fig. 3 is a cross section showing the packaging bag in Fig. 2 when being opened.
Fig. 4 schematically shows a manufacturing method of a multilayered tape according to the first exemplary embodiment.
Fig. 5 is a perspective view showing a cross-sectional surface of a deformed die shown in Fig. 4.
Fig. 6 schematically shows a manufacturing method of a packaging bag according to the first exemplary embodiment.
Fig. 7A schematically shows a manufacturing process of the packaging bag according to the first exemplary embodiment.
Fig. 7B schematically shows the manufacturing process of the packaging bag according to the first exemplary embodiment.
Fig. 7C schematically shows the manufacturing process of the packaging bag according to the first exemplary embodiment.
Fig. 7D schematically shows the manufacturing process of the packaging bag according to the first exemplary embodiment.
Fig. 7E schematically shows the manufacturing process of the packaging bag according to the first exemplary embodiment.
Fig. 8 is a cross section taken along II-II line in Fig. 1 according to a second exemplary embodiment of the invention.
Fig. 9 is a cross section showing a packaging bag in Fig. 8 when being opened.
Fig. 10 is a cross section showing a multilayered tape according to a third exemplary embodiment of the invention.
Fig. 11 is a cross section showing a multilayered tape according to a fourth exemplary embodiment of the invention.
Fig. 12 is a cross section showing a multilayered tape according to a modification of the invention.
Fig. 13 is a cross section showing a multilayered tape according to a modification of the invention.
Fig. 14 is a cross section showing a multilayered tape according to a modification of the invention.
Fig. 15 is a cross section showing a multilayered tape according to a modification of the invention.
Fig. 16 is a cross section showing a multilayered tape according to a modification of the invention.
Fig. 17 is a cross section showing a multilayered tape according to a modification of the invention.
Fig. 18 is a cross section showing a multilayered tape according to a modification of the invention.
Fig. 19 is a cross section showing a multilayered tape according to a modification of the invention.
Fig. 20 is a cross section showing a multilayered tape according to a modification of the invention.
Fig. 21 is a cross section showing a multilayered tape according to a modification of the invention.
Fig. 22 is a front view showing a packaging bag according to a modification of the invention.

### Explanation of Codes

100 packaging bag
1 bag body
15 heat-seal portion
2 multilayered tape
21 first surface layer
22 second surface layer
23 intermediate layer
3 fastener tape
31 engagement portion
32 male member
33 female member
321, 331 belt-like base
4 multilayer deformed co-extruder
5 manufacturing machine
S boundary

### Best Mode for Carrying Out the Invention

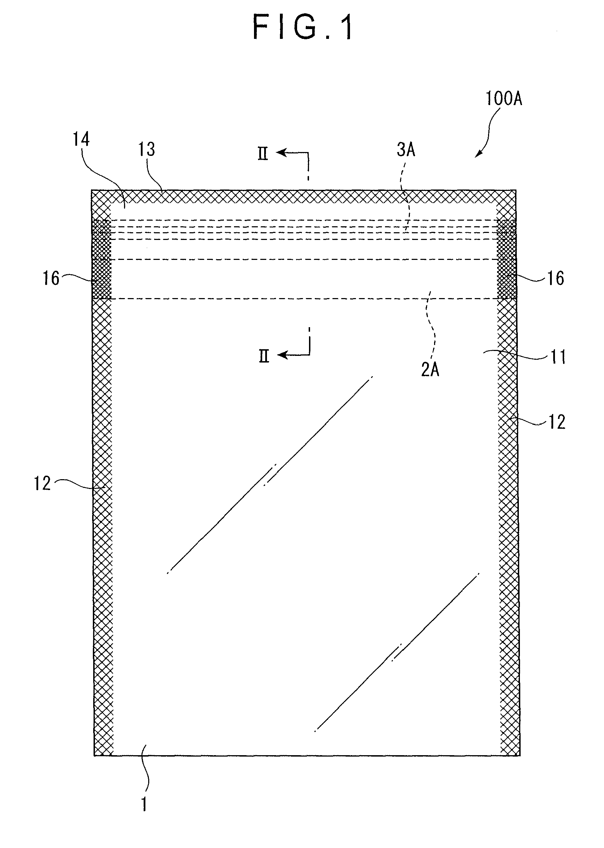

Exemplary embodiment(s) of the invention will be described below with reference to the attached drawings. In the description of the embodiment(s), the explanation of the components with the same reference numerals will be simplified or omitted.
A first exemplary embodiment of the invention will be initially described below with reference to Figs. 1 to 3.

### 1. First Exemplary Embodiment

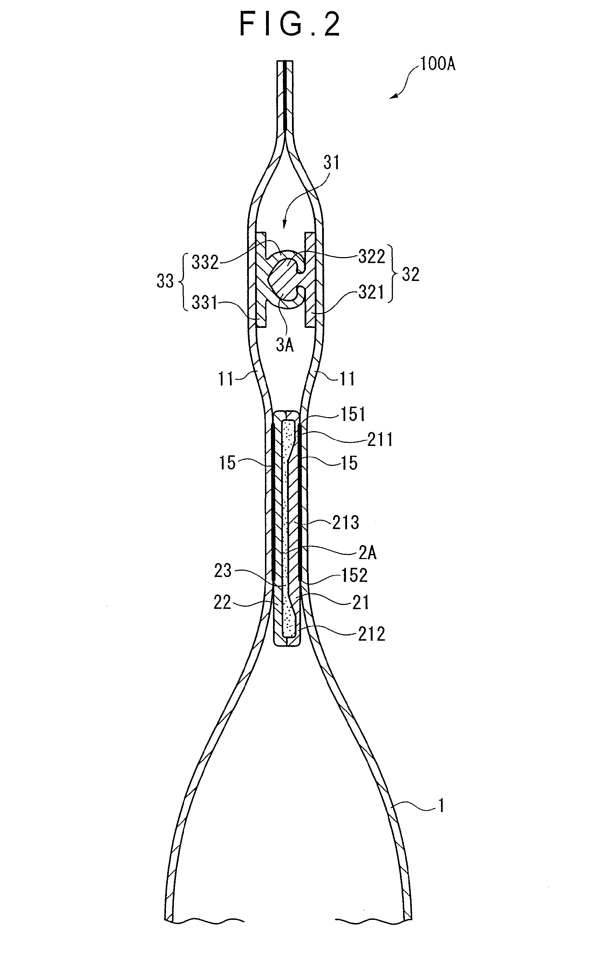

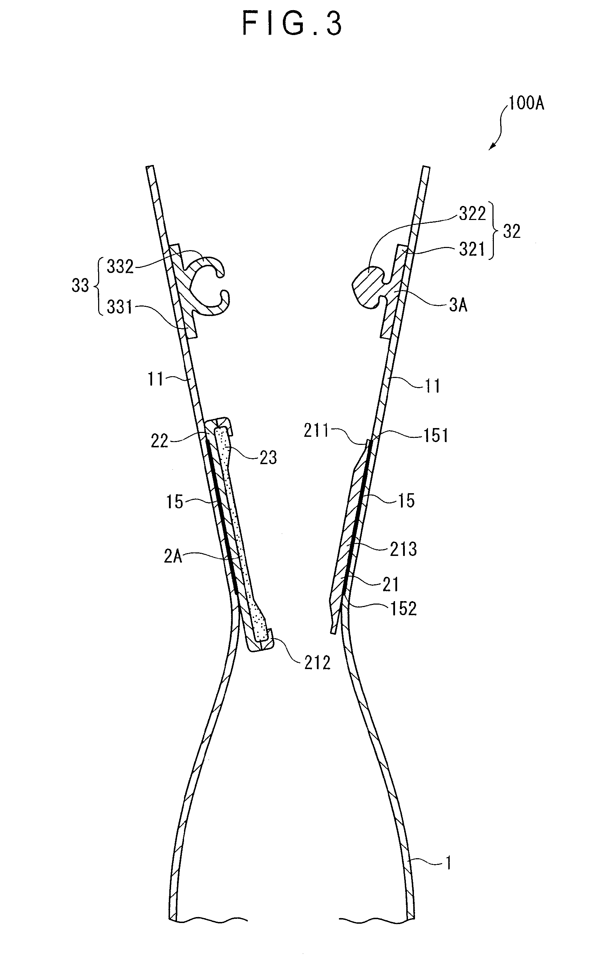

Fig. 1 is a front view of a packaging bag with a multilayered tape in a sealed state according to a first exemplary embodiment. Fig. 2 is a cross section taken along II-II line in Fig. 1 according to the first exemplary embodiment. Fig. 3 is a cross section of the packaging bag in Fig. 2 in an opened state.

### 1-1. Arrangement of Packaging Bag 100

As shown in Fig. 1, a multilayered tape 2A and a fastener tape 3A are provided on an inner surface of a bag body 1. The bag body 1 is formed by superposing base films 11 (wrapping materials) and providing a side-seal portion 12 and a top-seal portion 13 on the periphery of the base films 11. The multilayered tape 2A is attached to an inner surface of an opening portion 14 of the bag body 1 and the fastener tape 3A is attached closer to the opening portion 14 than the multilayered tape 2A is.
Incidentally, after contents (not shown) are packaged in the bag body 1 from the bottom side, the bottom side of the bag body 1 is sealed to provide a hermetic space.

A user holds the base films 11 provided face to face on the opening portion 14 of the bag body 1 with both hands and opens the opening portion 14 sealed with the multilayered tape 2A after splitting the fastener tape 3A.

### 1-2. Arrangement of Multilayered Tape 2A

As shown in cross section of Fig. 2, the multilayered tape 2A has a three-layered structure of a first surface layer 21 that is the outermost layer and substantially rectangular in cross section, a second surface layer 22, and an intermediate layer 23 interposed therebetween. The multilayered tape 2A is sealed at the seal portion 15 to be interposed between the opposed base films 11 of the bag body 1.

In cross section of the multilayered tape 2A, the first surface layer 21 has nonuniform thickness in a width direction of the multilayered tape 2A. The first surface layer 21 includes thin portions 211 and 212 on the both ends, and also includes a thick portion 213 interposed between the thin portions 211 and 212. These thin portions 211 and 212 and thick portion 213 provide a projection. The thin portions 211 and 212 are easily split or peeled, and the thick portion 213 is not easily split or peeled. The intermediate layer 23 adjacent to the first surface layer 21 is a recess to be fitted with the projection.

The thickness of the thin portions 211 and 212 of the first surface layer 21 is preferably in a range of 0 (i.e., the thin portions are removed) to 30 µm. When the thickness exceeds 30 µm, the first surface layer 21 is not easily split and thus the easily-openability is not exhibited. The thick portion 213 is required to be thicker than the thin portions 211 and 212, and is preferably in a range of 40 to 100 µm. (The thickness of the thick portion 213 can exceed 100 µm, but the tape would become too thick and the appearance of the side seal portion would become deteriorated as a packing body.)

The length of each of the layers of the multilayered tape 2A in the width direction is arranged so that both ends of the first surface layer 21 and the second surface layer 22 extend longer than both ends of the intermediate layer 23, and are bonded with each other to cover the both ends of the intermediate layer 23. Accordingly, the intermediate layer 23 is not exposed to the contents of the packaging body 100A.
Also, the seal portion 15 is shorter than the layers of the multilayered tape 2A in the width direction. The seal portion 15 is sealed so that an opening-side end 151 contacts the thin portion 211 and a content-side end 152 contacts the thick portion 213.

As shown in Fig. 3, the thin portion 211 of the first surface layer 21 is split, so that the above-described multilayered tape 2A is split along a boundary surface between the first surface layer 21 and the intermediate layer 23. When the multilayered tape 2A is split towards the thin portion 212 and then the thin portion 212 is eventually split, the packaging bag 100A can be opened.

Various polyolefins are usable for the respective layers of the multilayered tape 2A. For example, one or combination of two or more of homo-polypropylene (HPP), random-polypropylene (RPP), block-polypropylene (BPP), low-density polyethylene (LDPE), linear low-density polyethylene (LLDPE) and high-density polyethylene (HDPE) may be used.

In this exemplary embodiment, adhesive resin is used for the intermediate layer 23. The adhesive resin used for the intermediate layer 23 contains the mixture of particles mainly composed of rubber block copolymer containing styrene block and diene block, and tackifier resin; and particles mainly composed of rubber block copolymer containing styrene block and diene block, and plasticizer.

Mixing particles (C) mainly composed of rubber block copolymer containing styrene block and diene block in addition to particles (A) mainly composed of rubber block copolymer containing styrene block and diene block, and tackifier resin, and particles (B) mainly composed of rubber block copolymer containing styrene block and diene block, and plasticizer allows adjustment of blend ratio of rubber block copolymer, tackifier resin and plasticizer. Thus, properties of the adhesive material can be modified in accordance with the requirements thereof

The rubber block copolymer contained in (C) may be the same as the rubber block copolymers contained in (A) and (B). The rubber block copolymer contained in (C) may be the same as or different from the rubber block copolymers contained in (A) and (B).

Examples of the rubber block copolymer containing styrene block and diene block are: block copolymer in which polystyrene block and vinyl-polyisoprene block are bonded; block copolymer in which polystyrene block and ethylene-propylene block are bonded; block copolymer in which polystyrene block and ethylene-butadiene block are bonded; and block copolymer in which polystyrene block and ethylene-ethylene-propylene block are bonded. Preferably, the rubber block copolymer containing styrene block and diene block may be hydrogenated rubber block copolymer because the hydrogenated rubber block copolymer has no smell.
The rubber block copolymer containing styrene block and diene block may be added with antioxidant and lubricant as long as the properties are not impaired.

Examples of the tackifier resin are hydrogenated rosin resin, terpene resin, hydrogenated terpene resin, C5/C6 aliphatic petroleum resin, and alicyclic petroleum resin. Examples of the plasticizer are liquid paraffin, process oil (aromatic, naphthenic or paraffinic petroleum hydrocarbon) and synthetic wax.

These resins are preferably mixed such that rubber block copolymer: tackifier resin: plasticizer = 40 to 70 mass % : 20 to 50 mass % : 10 to 30 mass %. More preferably, rubber block copolymer: tackifier resin: plasticizer = 40 to 60 mass % : 22 to 50 mass % : 10 to 28 mass %. When the resins are not mixed at the above-described blend ratio, re-adhesive strength may be lowered.
The adhesive resin can be produced by kneading and melting the rubber block copolymer, tackifier resin, plasticizer and the like using a uniaxial extruder, biaxial extruder, kneader and the like.

Preferably, materials for the layers are selected so that the adhesion strength between the first surface layer 21 and the intermediate layer 23 adjacent to the boundary surface to be split is lower than the adhesion strength between the second surface layer 22 and the intermediate layer 23 and the adhesion strength between the first and second surface layers 21 and 22 and the material films 11 of the bag body 1.

### 1-3. Arrangement of Fastener Tape 3A

The fastener tape 3A includes a pair of a male member 32 and a female member 33. The male member 32 includes a belt-like base 321 bonded to the bag body 1 and a projection 322 having a substantially arrow-tip shaped cross section. Similarly to the male member 32, the female member 33 includes a belt-like base 331 and a recess 332. An engagement portion 31 of the fastener tape 3A is provided by engaging the projection 322 of the male member 32 with the recess 332 of the female member 33. The projection 322 and the recess 332 are disengaged and engaged to open and re-close the bag.
The above-described resins used for the multilayered tape 2A can be used for the fastener tape 3A.

### 1-4. Manufacturing Method of Multilayered Tape 2A

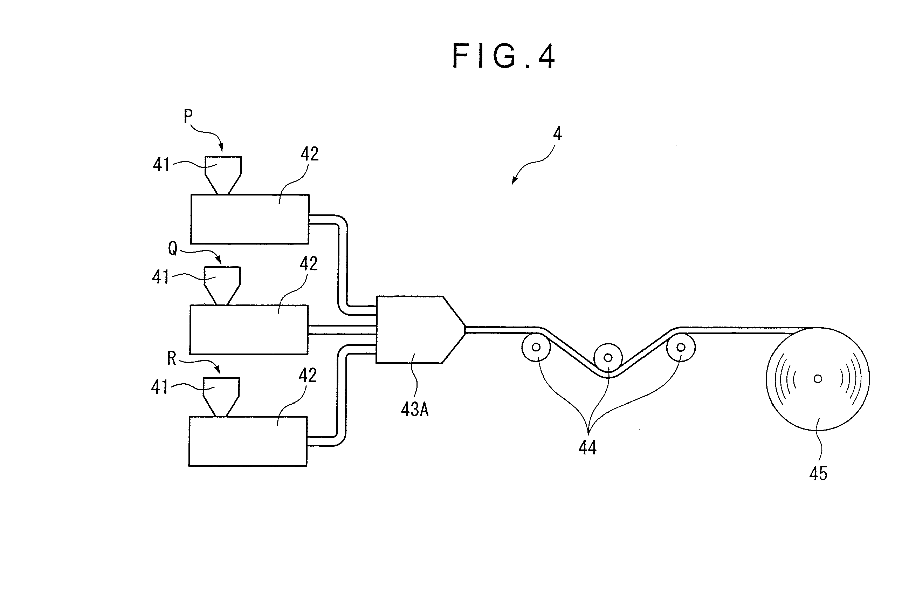

The multilayered tape 2A can be produced by feed-block-type or multi-manifold-type multi-layer deformed extruder. Additionally, the multilayered tape 2A can be also produced by extruding a material with a multilayer circular die and flattening the material to form into a tape.
A manufacturing method of the multilayered tape 2A including three different kinds of layers will be explained with reference to Fig. 4.
A multilayer deformed co-extruder 4 includes: three hoppers 41 into which three types of polyolefins P, Q and R are loaded; extruders 42 for extruding the loaded polyolefins; a deformed die 43 for molding the extruded polyolefins into the shape of the multilayered tape 2A; cooling rollers 44 for cooling the molded multilayered tape 2A; and a winding roller 45 for winding the cooled multilayered tape 2A. The number of the hoppers 41 and extruders 42 is the same as the number of the layers of the molded multilayered tape.

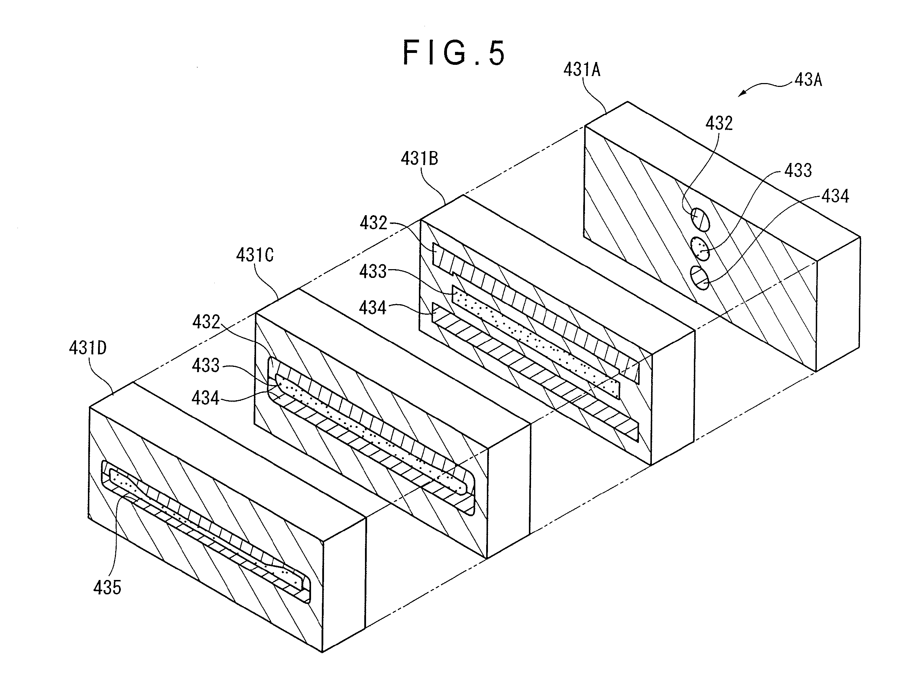

Within the deformed die 43, a flow channel is deformed to mold the multilayered tape 2A of three layers including the first surface layer 11, the intermediate layer 23 and the second surface layer 22. Fig. 5 is a perspective view of the deformed die 43 shown in Fig. 4. Fig. 5 shows cross sections 431A, 431B, 431C and 431D of the deformed die 43, which are spaced by a predetermined interval in this order from an entrance of the deformed die 43.
A cross section 431A is a cross sectional view of the entrance of the deformed die 43. Flow channels 432, 433 and 434 of the resins are provided on the cross section 431A. The respective flow channels are provided by an approximately equal interval. The flow channel 433 provided in the center is for adhesive resin, and the flow channels 432 and 434 provided on the both sides of the channel for the adhesive resin are for polyolefins.
The flow channels are extruded into the shapes of the respective layers on the cross section 431B and are bonded with each other on the cross section 431C, so that the flow channels reach the cross section 431D of the exit of the deformed die 43.
The cross section 431D is provided with only one flow channel 435 having a rectangular shape of 60 mm width and 0.5 mm thickness. The three separate flow channels 432, 433 and 434 at the entrance are deformed within the deformed die 43 (see 431B and 431C) and are bonded as the flow channel 435 at the exit, so that all materials are mixed to mold the multilayered tape 2A having three layers.
Incidentally, the thickness of the respective layers of the multilayered tape 2A can be adjusted by changing the ratio of screw revolving speed of the extruder 42 per each layer. The total thickness and width of the multilayered tape 2A can be adjusted corresponding to drawing speed of the multilayered tape 2A.

### 1-5. Manufacturing Method of Packaging Bag 100A

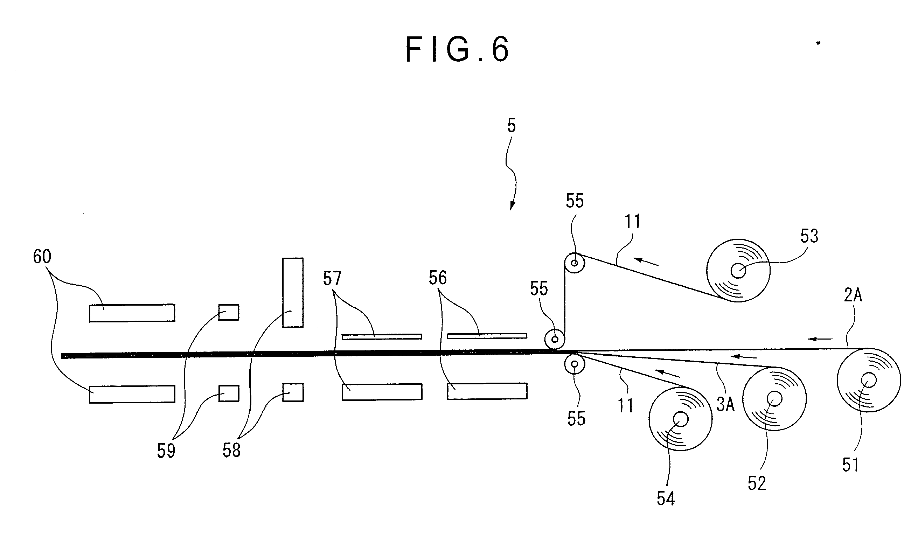

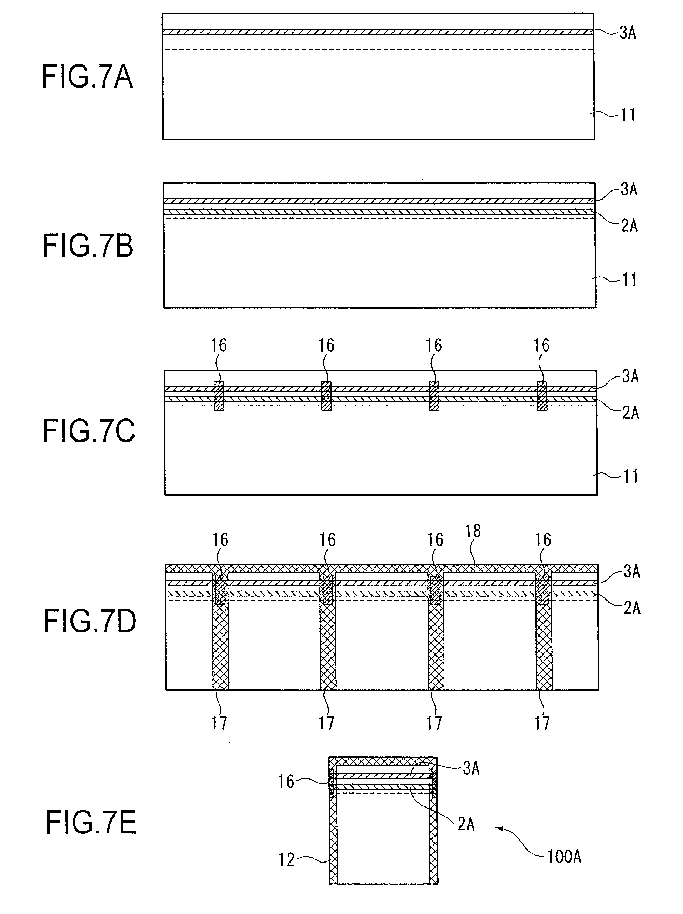

Next, an attachment process of the multilayered tape 2A to the bag body 1 will be described below with reference to Fig. 6 and Figs. 7A to 7E. Fig. 6 schematically shows a manufacturing apparatus 5 for manufacturing the packaging body 100A, and Figs. 7A to 7E schematically show a manufacturing process shown in Fig. 6.
In a first exemplary embodiment, the packaging bag 100A is a four-side adhesion bag. The base films 11 of the bag body 1 may be: a film made of polyethylene terephthalate (PET), nylon (Ny) and cast polypropylene (CPP); a film made of PET, aluminum (AL) foil and CPP; a film made of PET, Ny and L-LDPE; a transparent vapor-deposited film made of PET and L-LDPE; and a film made of Ny, ethylene vinyl alcohol (EVOH) and L-LDPE. In addition, a polypropylene (PP) sheet, a multilayer sheet made of polyethylene (PE) and polystyrene (PS), and a thermally molded product of a multilayer sheet made of Ny and PE may be used.

As shown in Fig. 6, the manufacturing apparatus 5 includes: feed rollers 51, 52, 53 and 54; three rollers 55; a fastener tape sealer 56; a multilayered tape sealer 57; an ultrasonic sealer 58; and base film sealers 59 and 60.
The feed roller 51 feeds the multilayered tape 2A that is wound thereon in advance. The feed roller 52 feeds the fastener tape 3A that is wound thereon in advance. The feed rollers 53 and 54 feed the base films 11 that are wound thereon in advance. The roller 55 supports the base films 11.

Simultaneously with continuously feeding the two base films 11 by the feed rollers 52 and 53 onto the manufacturing apparatus 5, the multilayered tape 2A and the fastener tape 3A are also supplied onto the manufacturing apparatus 5 by the feed rollers 51 and 52 so that the multilayered tape 2A and the fastener tape 3A are sandwiched between the two base films 11. Then, the fastener tape 3A and the base films 11 are initially sealed by the faster tape sealer 56 (Fig 7A). Then, using the multilayered tape sealer 57, the multilayered tape 2A and the two base films 11 are sealed and bonded from both sides by a heat-seal bar having 7 mm width (Fig 7B).
Next, with the use of the ultrasonic sealer 58, the overlaid multilayered tape 2A, fastener tape 3A and base films 11 are ultrasonic-sealed to provide ultrasonic seal portions 16 with an interval corresponding to the length of the opening portion 14 of the packaging bag 100A (Fig. 7C).
Then, partitions 17 covering the ultrasonic seal portions 16 are provided as side-seal portions 12 in a direction orthogonal to the longitudinal direction of the base films 11, which are sealed by the base film sealer 59. Subsequently, a partition 18, which serves as the top-seal portion 13 of the packaging bag 100A, is sealed by the base film sealer 60 (Fig. 7D).
Finally, the base films 11 are cut along the centerlines of the partitions 17 to obtain the packaging bag 100A (Fig. 7E).

### 1-6. Advantages of First Exemplary Embodiment

According to the first exemplary embodiment, the following advantages can be attained.
(1) Since the first surface layer 21 of the multilayered tape 2A includes the thin portion 211, the thin portion 211 can be easily split when the packaging bag 100A is opened. The multilayered tape is split at the boundary surface between the first surface layer 21 and the intermediate layer 23 adjacent thereto, and then the thin portion 212 provided at the content-side end of the first surface layer 21 is split. Thus, the packaging bag can be easily opened. Especially, the packaging bag is sealed so that the thin portion 211 contacts the opening-side end 151 of the seal portion 15, thus enhancing the easy-openability.

(2) Since the content-side end 152 of the seal portion 15 is in contact with the thick portion 213 of the multilayered tape 2A, the packaging bag is not easily spit even when pressure is applied on the contents. Thus, the sealing performance and pressure resistance can be maintained.

(3) Since the first surface layer 21 and the intermediate layer 23 are made of different kind of resins, the first surface layer 21 can be easily peeled off from the intermediate layer 23 at the boundary surface therebetween. Thus, easy-openability can be enhanced.

(4) Since the adhesive resin of the intermediate layer 23 of the multilayered tape 2A is covered by the first surface layer 21 and the second surface layer 22, the adhesive resin is not exposed to the outside. Accordingly, the adhesive resin is not eluted to the contents and thus less amount of oil-soluble component is eluted when the contents are heat-sterilized, so that sanitary condition can be kept. Also, the contents do not seep in between the respective layers of the multilayered tape 2A. Thus, the packaging bag can exhibit excellent sealing performance without lowering adhesion strength at the boundary surface even when acrid contents such as bean-curd soup seasoned with red pepper and curries are packaged.

(5) Since the intermediate layer 23 is made of adhesive resin, the packaging bag can be re-sealed after being opened. Also, since the adhesion resin is provided by a rubber copolymer containing styrene block and diene block, less smell is emitted and high re-adhesion strength can be obtained.

(6) Since the packaging bag 100A is sealed by the multilayered tape 2A between the fastener tape 3A and the contents, the contents do not adhere to the fastener tape during transportation and retort-treatment. Thus, the fastener tape is not contaminated to be maintained clean. Further, the contents do not seep into the fastener tape, thereby maintaining the sealing performance.

(7) Since the positions at which the seal portion 15 for sealing the multilayered tape 2A and the bag body 1 are provided in the respective surfaces of the multilayered tape 2A are not required to be displaced from each other, the multilayered tape 2A can be produced in a single step. Also, since the seal portion 15 has 7 mm width, which considerably shorter than the multilayered tape 2A, more reliable sealing can be performed. Thus, even when seal accuracy is not excellent, the packaging bag can be reliably sealed so that the sealing performance can be ensured. Further, the easy-openability can be also maintained because the thin portion 211 of the first surface layer 21 is initially peeled off
In other words, the production process can be simplified with low cost.

(8) Since the multilayer deformed co-extruder is used for producing the multilayered tape 2A, the multilayered tape 2A can be produced in a single step with less work and production cost.

### 2. Second Exemplary Embodiment

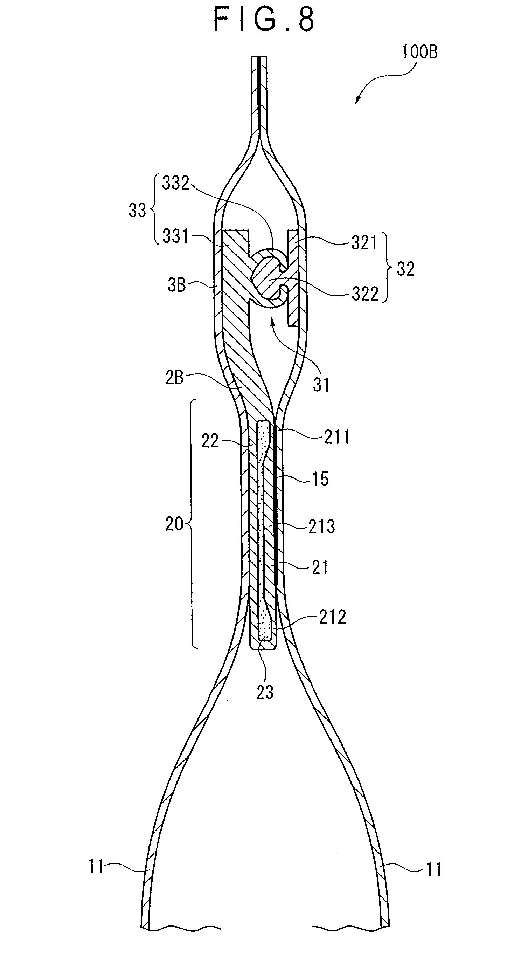

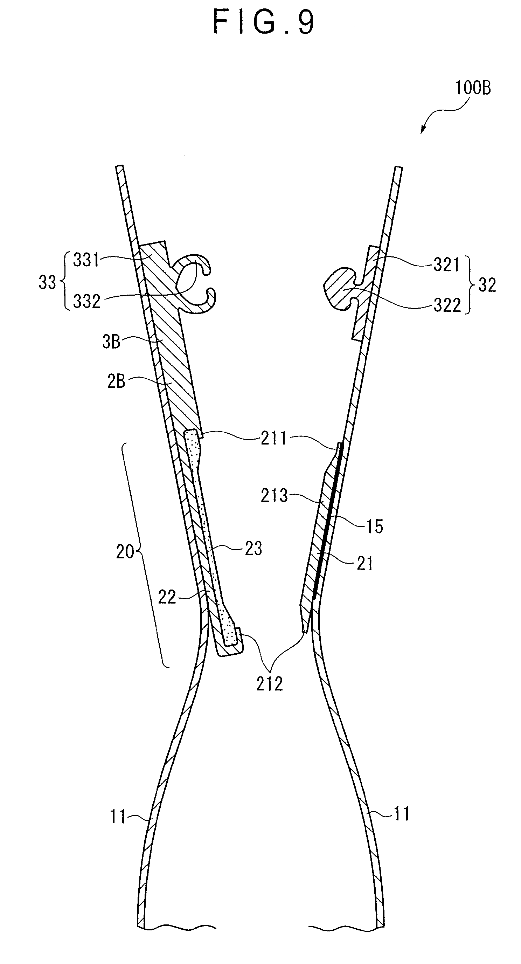

Next, a second exemplary embodiment of the invention will be described below with reference to Figs. 8 and 9. The multilayered tape of the second exemplary embodiment is integrated with the fastener tape. Components other than the multilayered tape are the same as in the first exemplary embodiment, the description of which will be omitted.

### 2-1. Arrangement of Multilayered Tape 2B

Fig. 8 is a cross section of the packaging bag 100B with the multilayered tape 2B of the second exemplary embodiment.
As shown in Fig. 8, the multilayered tape 2B includes a resealable fastener tape portion 3B and a multilayered portion 20 for sealing the packaging bag 100B.
Similarly to the fastener tape 3A of the first exemplary embodiment, the fastener tape portion 3B includes a pair of a male member 32 and a female member 33. The male member 32 has a belt-like base 321 bonded to the bag body 1 and the female member 33 has a belt-like base 331 bonded to the bag body 1. The engagement portion 31 of the fastener tape portion 3B is provided by engaging the male member 32 with the female member 33. The members 32 and 33 are disengaged and engaged to open and re-close the packaging bag.

The multilayered portion 20 is integrated with a wide portion of the belt-like base 331 of the fastener tape portion 3B, the wide portion extending toward the contents.
A cross sectional profile of the multilayered portion 20 is the same as in the first exemplary embodiment. The multilayered tape portion 20 has a three-layered structure of the first surface layer 21 that is the outermost layer, the second surface layer 22, the intermediate layer 23 interposed between the first surface layer 21 and the second surface layer 22. The thickness of the first surface layer 21 is nonuniform in the width direction of the multilayered tape 2A. The sealing portion 15 is formed and sealed at a substantially center of the multilayered portion 20.

As shown in Fig. 9, the thin portion 211 is ruptured so that the above-described multilayered tape 2B is split at the boundary surface between the first surface layer 21 and the intermediate layer 23. Then, the thin portion 212 is ruptured and thus the bag is opened.
The same resin is used for the layers of the multilayered tape 2B as in the first exemplary embodiment, but the multilayered tape 2B includes three layers of two different kinds in the second exemplary embodiment. The first surface layer 21 and the second surface layer 22 are made of the same kind of polyolefin, and the intermediate layer 23 is made of adhesive resin.
The multilayered tape 2B can be produced by using a deformed die having the profile of the multilayered tape 2B instead of using the deformed die of the multilayer deformed co-extruder 4 of the first exemplary embodiment.

In this second exemplary embodiment, the following advantages as well as the same advantages as in the first exemplary embodiment can be attained.
(9) Since the multilayered tape 2B is integrated with the faster tape portion 3B in the second exemplary embodiment, the multilayered tape 2B having the function of the fastener tape can be produced in a single step by the multilayer deformed co-extruder 4. Also, in a step for attaching the multilayered tape 2B to the bag body 1, positioning and welding of the multilayered tape 2B inserted between the two base films 11 can be simplified.

### 3. Third Exemplary Embodiment

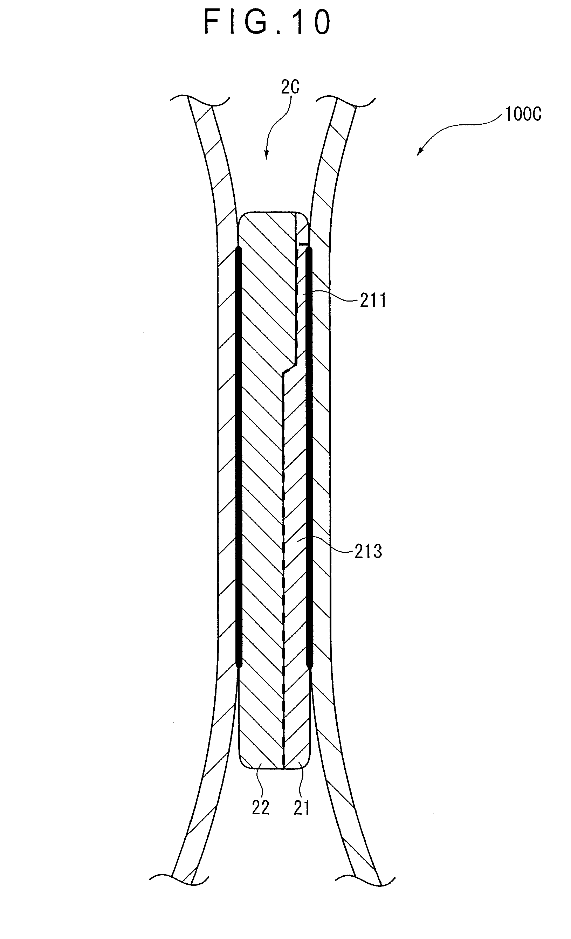

Next, a third exemplary embodiment of the invention will be described below with reference to Fig. 10. A multilayered tape 2C of the third exemplary embodiment has a two-layered structure and is attached to the inner surface of the packaging bag 100C. Components other than the multilayered tape 2C are the same as in the first exemplary embodiment, the description of which will be omitted.

### 3-1. Arrangement of Multilayered Tape 2C

Fig. 10 is a cross section of the multilayered tape 2C according to the third exemplary embodiment.
As shown in Fig. 10, the multilayered tape 2A has a rectangular shape in cross section and has the two-layered structure of the first surface layer 21 and the second surface layer 22.

In cross section of the multilayered tape 2C, the first surface layer 21 and the second surface layer 22 have nonuniform thickness in the width direction of the multilayered tape 2C. The thin portion 211 is provided at an opening-side of the first surface layer 21. Also, the thick portion 213 thicker than the thin portion 211 is provided at a content-side of the first surface layer 21. In the third exemplary embodiment, the thin portion 211 is easily split or peeled, and the thick portion 213 is not easily split or peeled.

The layers of the multilayered tape 2C may be made of various polyolefins used in the first exemplary embodiment. Preferably, combination of resins having adhesion strength lower than the adhesion strength between the first and second surface layer 21 and 22 and the base films 11 are used for the first and second layers 21 and 22 in terms of easy-openability. For example, LLDPE is used for the base films 11; LDPE is used for the first surface layer 21; and RPP is used for the second surface layer 22. Adhesion strength between LDPE and RPP is lower than the adhesion strength between LLDPE and LDPE and the adhesion strength between LLDPE and RPP. Thus, LDPE (the first surface layer 21) is peeled off from RPP (second surface layer 22) at the boundary surface therebetween. The multilayered tape 2C is sealed by the seal portion 15 to be interposed between the opposed base films 11 of the bag body 1. The sealing portion 15 is sealed at a substantially center of the multilayered tape 2A.

As shown by the dashed line in Fig. 10, the thin portion 211 of the first surface layer 21 is ruptured so that the above-described multilayered tape 2C is split at the boundary surface between the first and second surface layer 21 and 22, thereby opening the packaging bag 100C.

### 3-2. Manufacturing Method of Multilayered Tape 2C

Similarly to the first exemplary embodiment, the multilayered tape 2C can be produced in a single step by the multilayer deformed co-extruder 4. However, two flow channels are provided at the entrances of the hoppers, extruders, and deformed die, respectively, because the multilayered tape 2C has a two-layered structure. Accordingly, the multilayered tape 2C is molded by the same manufacturing method as in the first exemplary embodiment.
Thus, in the third exemplary embodiment, the same advantage as (1), (2), (3), (6), (7) and (8) of the first exemplary embodiment described above can be attained.

### 4. Fourth Exemplary Embodiment

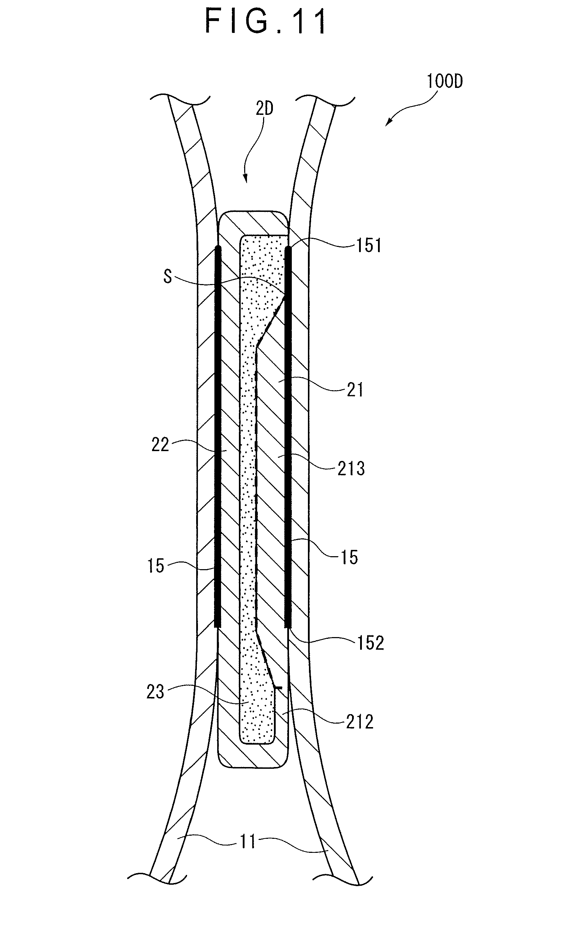

Next, a fourth exemplary embodiment of the invention will be described below with reference to Fig. 11. A multilayered tape 2D of the fourth exemplary embodiment has a three-layered structure. Components other than the cross sectional profile of the multilayered tape 2D are the same as in the first exemplary embodiment, the description of which will be omitted.

### 4-1. Arrangement of Multilayered Tape 2D

Fig. 11 is a cross section of the multilayered tape 2D according to the fourth exemplary embodiment.
In cross section of the multilayered tape 2D as shown in Fig. 11, the first surface layer 21 is shorter than the second surface layer 22, and the intermediate layer 23 is exposed to the surface of the multilayered tape 2D at the opening-side of a packaging bag 100D.

The first surface layer 21 includes the thick portion 213 and the thin portion 212. In the fourth exemplary embodiment, the boundary S between the first surface layer 21 and the intermediate layer 23 is easily split or peeled, and the thick portion 213 is not easily split or peeled.
As shown by the dashed line in Fig. 11, the intermediate layer 23 and the first surface layer 21 starts to be separated at the boundary S, and the multilayered tape 2D is split along the boundary surface between the layers 23 and 21. Then, the thin portion 212 is split and thus the packaging bag 100D is opened.
Accordingly, in the fourth exemplary embodiment, the same advantages can be attained as in the first exemplary embodiment.

### 5. Modifications of Exemplary Embodiment

The invention is not limited to the above-described exemplary embodiments, but includes modifications and improvements as long as an object of the invention can be achieved.
For example, the cross sectional profile of the multilayered tape 2 is not limited to the profiles described in the first to fourth exemplary embodiments, and may has other shape as described below.

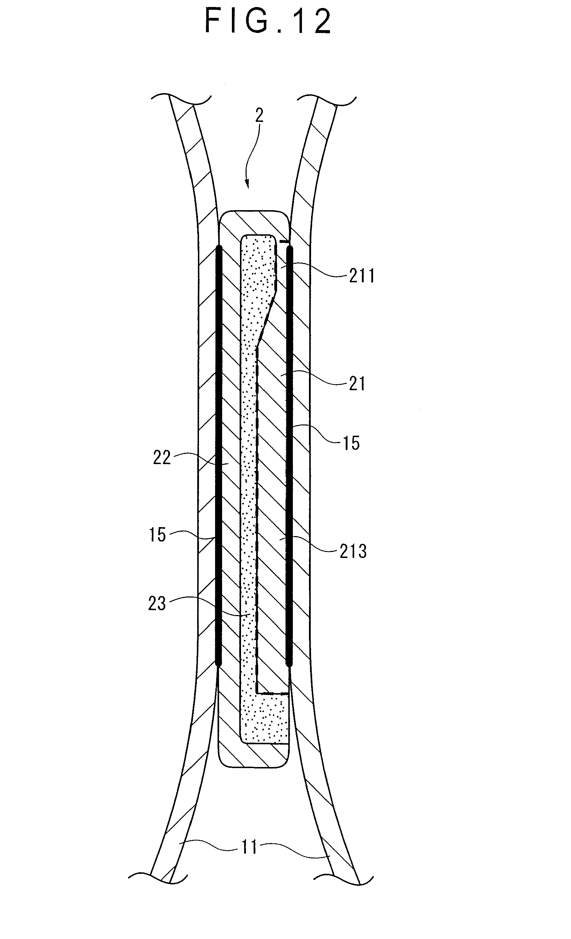

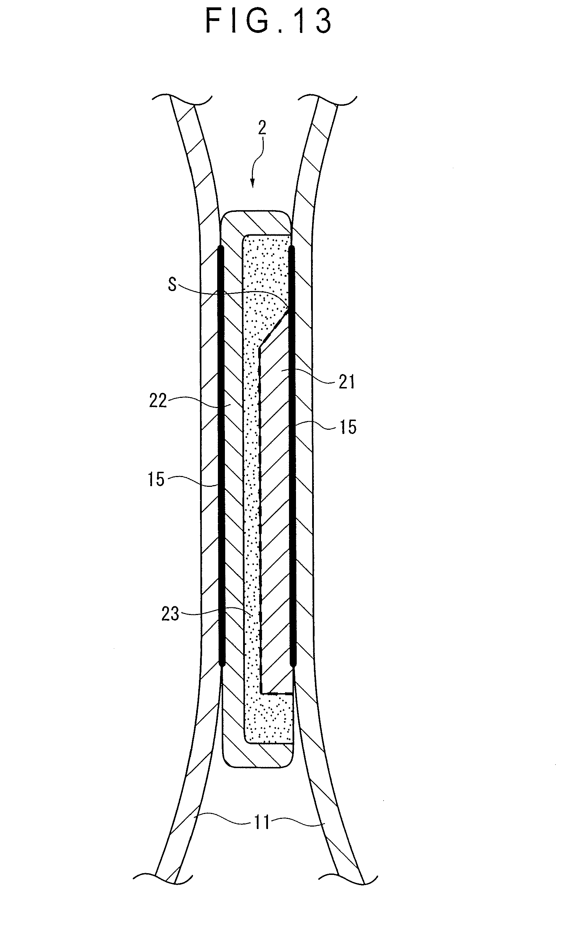

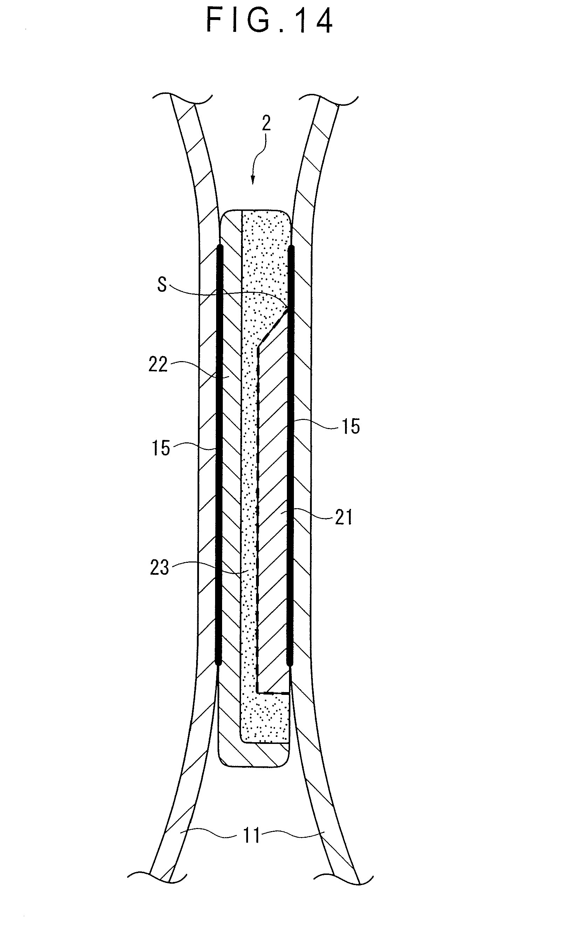

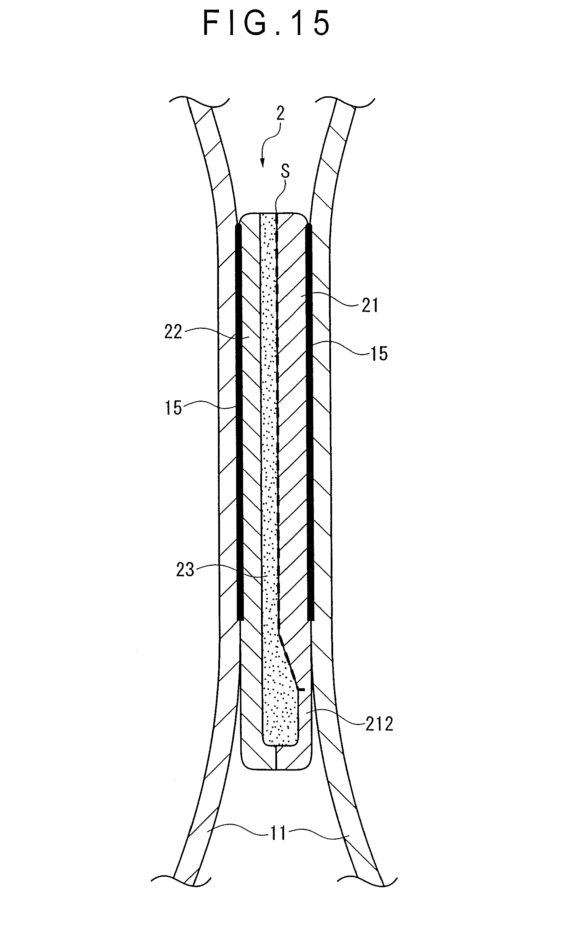

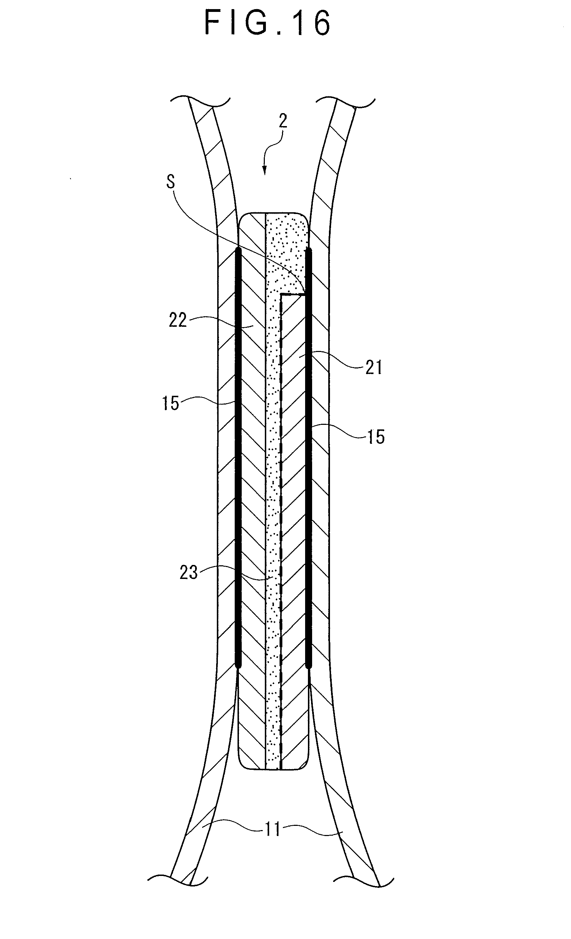

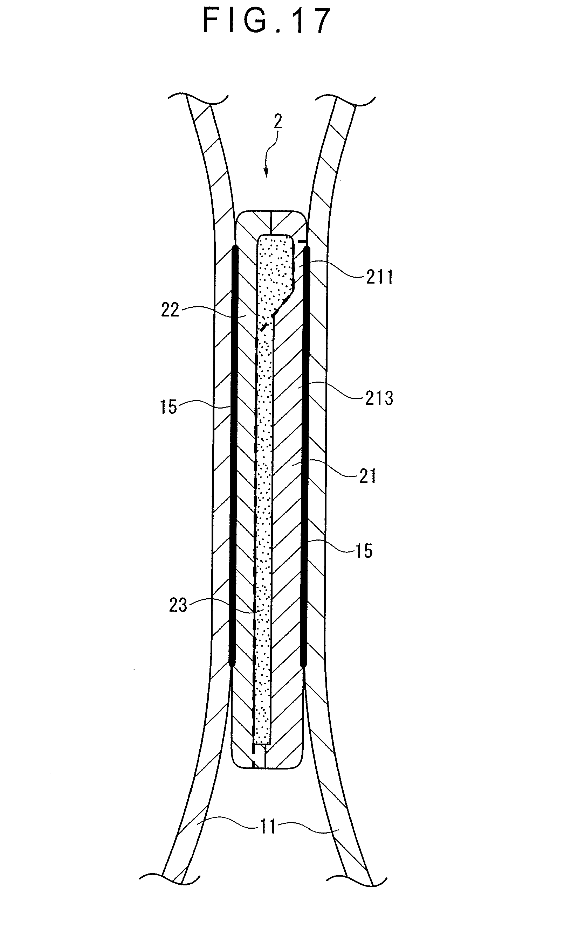

As shown in Fig. 12, the intermediate layer 23 may be exposed to the content-side of the packaging bag 100 when the multilayered tape has the three-layered structure. At this time, resin used for the intermediate layer 23 is required to be highly safe. The multilayered tape 2 having such a profile is split along the dashed line.
Alternatively, the multilayered tape may have a cross sectional profile as shown in Figs. 13 to 17. As shown by the dashed line in each of the figures, the thin portion 211 of the first surface layer 21 or the boundary S between the first surface layer 21 and the intermediate layer 23 is split so that the first surface layer 21 and the intermediate layer 23 are peeled along the boundary surface.

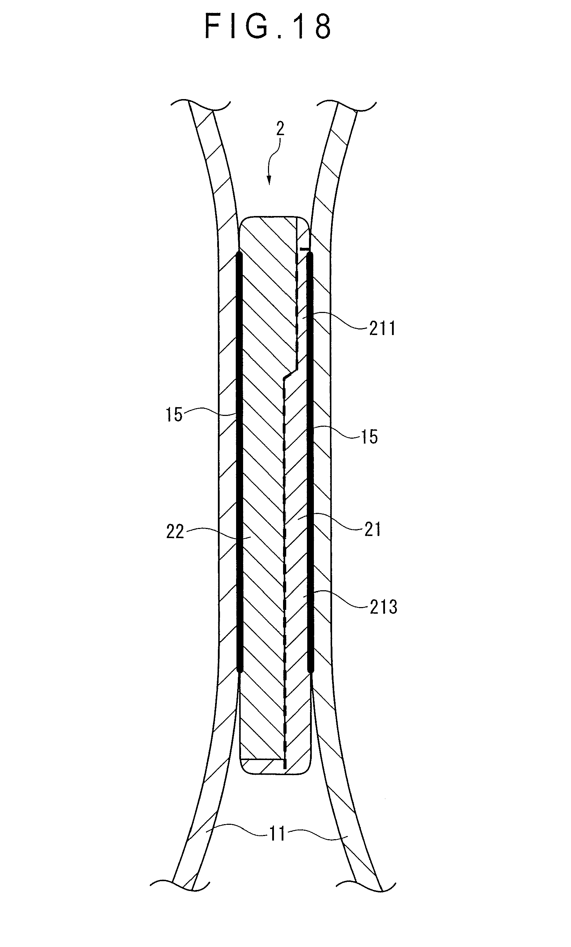

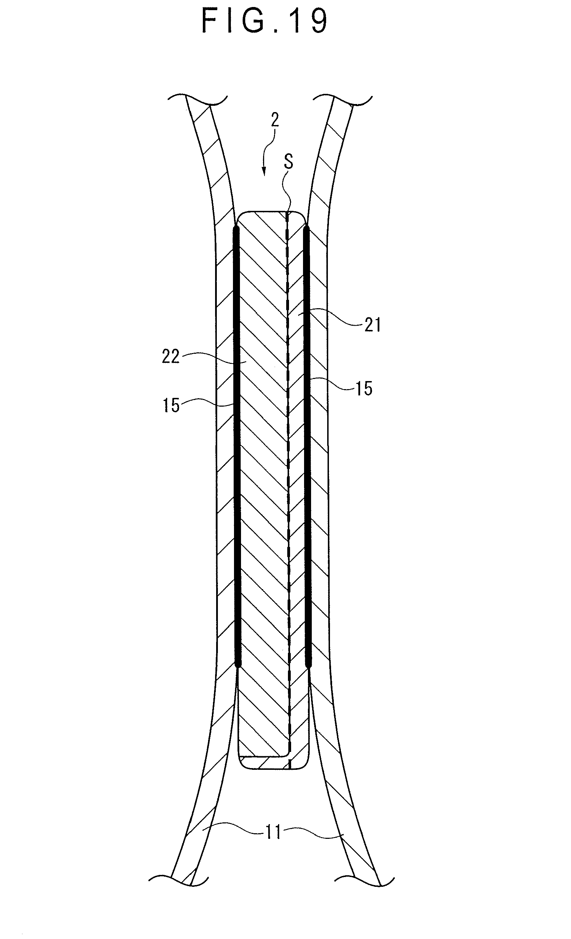

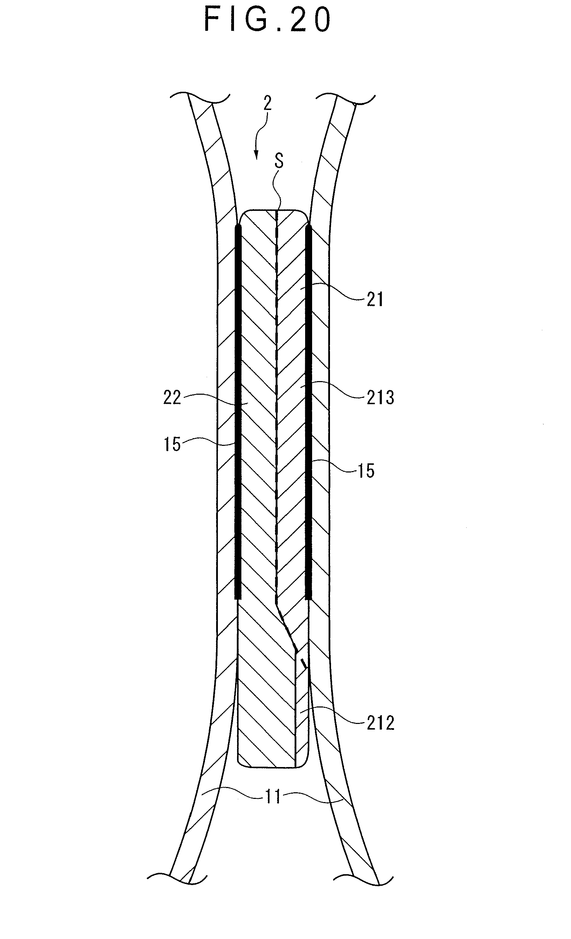

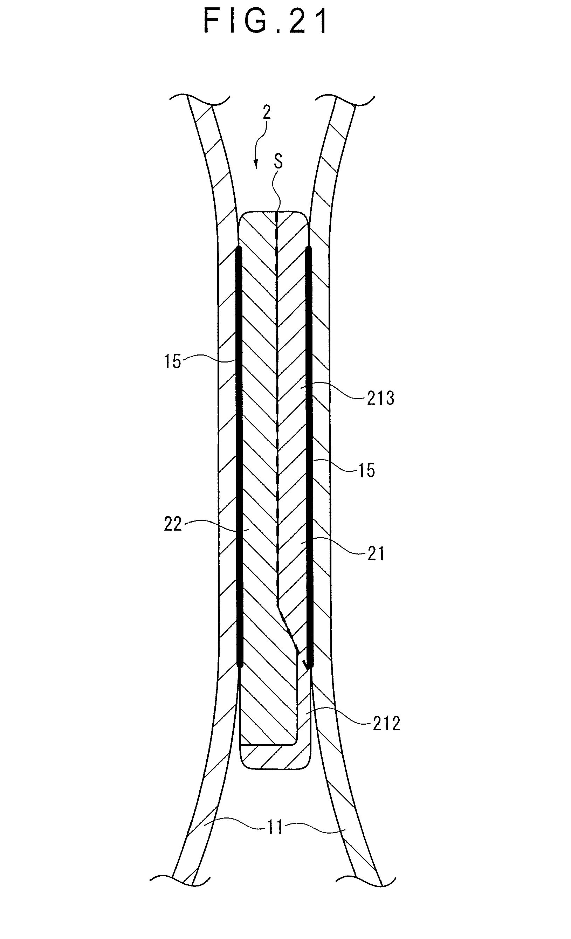

When the multilayered tape has the two-layered structure, the multilayered tape may have cross sectional profiles as shown in Figs. 18 to 21. As shown by the dashed line in each of the figures, the thin portion 211 of the first surface layer 21 or the boundary S between the first surface layer 21 and the second surface layer 22 is ruptured so that the first surface layer 21 and the second surface layer 22 are peeled along the boundary surface.

The multilayered tape is not limited to the three-layered structure according to the first and second exemplary embodiments or to the two-layered structure according to the third exemplary embodiment. For example, the multilayered tape may have four-layered structure made of three kinds of resins. Examples of a combination of resins may be: RPP/HPP/LDPE, HDPE or LLDPE/RPP; RPP/BPP/mixture of HPP and LDPE/RPP; RPPBPP/HPP+LDPE+HDPE/RPP; LLDPE/HPP, BPP or RPP/HDPE/LLDPE; and LDPE/HPP, BPP or RPP/HDPE/LDPE. Since the surface layers are made of the same kind of resins, heat-seal temperature can be the same. Thus, the same contraction percentage of the both side of the surface layers can be maintained. Thus, a packaging bag that is not curled and has good appearance can be provided.

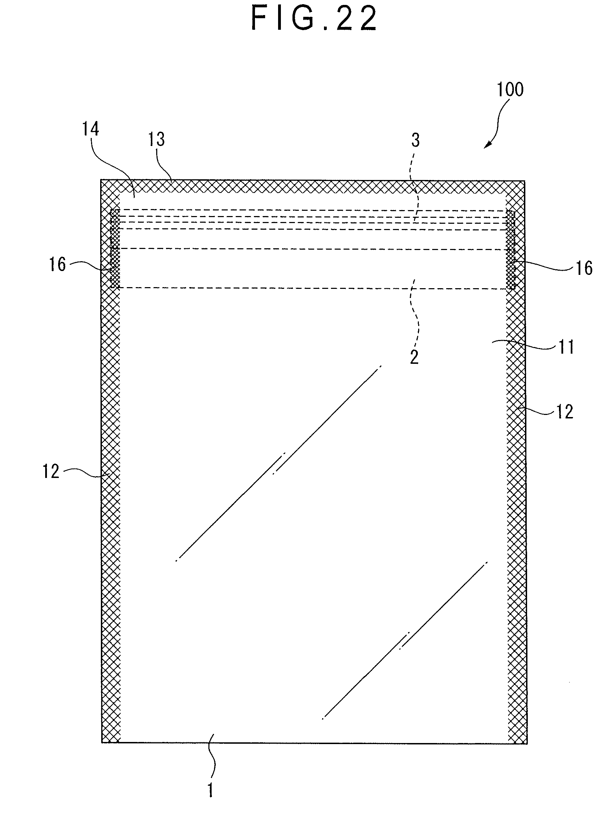

Though the ultrasonic-seal portion 16 of the multilayered tape 2 extends to the end of the side-seal portion 12 in the exemplary embodiments, the multilayered tape 2 may be shortened and the ultrasonic-seal portion 16 may extend only to the inner side of the side-seal portion 12 as shown in Fig. 22. Thus, the base films 11 are sealed together at a peripheral edge of the side-seal portion 12, thereby enhancing sealing performance.

### Examples

The invention will be further described below with Examples and Comparatives, but is not limited thereto.
Sealing performance and openability of packaging bags to which multilayered tapes produced by using methods shown in Examples 1 and 2 and Comparative 1 were respectively evaluated.

### Example 1

A multilayered tape integrated with a fastener tape was produced. A multilayered portion was made of three layers and two kinds of resins. The cross sectional profile of the multilayered portion was the same as in the first exemplary embodiment. The following resins were used.

A. Surface layers on both sides of the multilayered portion and a female member of a fastener tape: RPP (brand name: Prime Polypro F-744NP, manufactured by Prime Polymer Co., Ltd., MI=7g/10min, density: 0.9)
B. Intermediate layer of the multilayered portion: LLDPE (brand name: Moretec 0628G, manufactured by Prime Polymer Co., Ltd., MI=6g/10min, density: 0.916)
C. Male material of a fastener tape: RPP (brand name: Prime Polypro F-744NP, manufactured by Prime Polymer Co., Ltd., MI=7g/10min, density: 0.9)

The above-described resins (A) and (B) were loaded into hoppers of multilayer deformed co-extruders, respectively. A surface layer inside the multilayered portion was formed by a 30 mmϕ extruder, a surface layer outside the female member and the multilayered portion was formed by a 40 mmϕ extruder, and an intermediate layer of the multilayered portion was formed by a 30 mmϕ extruder, so that the multilayered tape integrated with the fastener tape was molded by deformed extrusion. The multilayered tape included the multilayered portion of 15 mm length, the fastener tape of 20 mm length, a belt-like base of 0.15 mm thickness, a thin portion of the surface layer of 0.01 µm, and a thick portion of 0.06 µm in cross section.
The resin (C) was loaded into a hopper of a multilayer deformed co-extruder to mold a male member.

Next, the multilayered tape was attached to a bag body for producing a bag. The base films used for the bag body was a multilayered film made of polyethylene terephthalate (PET), aluminum (AL), Nylon (Ny) and cast polypropylene (CPP).
The two base films fed from two rollers were supplied to a bag-producing apparatus while CPP surfaces of the two base films faced each other, and the multilayered tape in which the male and female members were engaged was inserted between the two base films to be thermally adhered to the CPP surfaces.
Next, the multilayered portion connected to the female member and the CPP surface of the opposed base films were sealed by a heat-seal bar having 7 mm width.
After the two base films and the end of the multilayered tape were crushed and sealed by an ultrasonic horn having a distal end of 35 mm × 20 mm, three side of a packaging bag was sealed corresponding to the position of the ultrasonic-seal portion and cut. Incidentally, the outer size of the packaging bag was 140 mm × 190 mm.

### Example 2

In Example 2, a multilayered tape was produced by the same method as in Example 1 except that an intermediate layer was made of adhesive resin. Then, a multilayered tape was attached to a bag body to produce a packaging bag. The adhesive resin was prepared by dry-blending of materials described below at a ratio of 2 : 1 : 2.

Material 1: 100 mass parts of mixture of: 25 mass % of polystyrene-polyisoprene block copolymer (brand name: Quintac 3520, manufactured by ZEON Corporation, MFR = 7/10min (200°C, 5kg), density: 0.93); and 75 mass % of C5-aromatic copolymer hydrogenated resin (brand name: I-MARV P-125, manufactured by Idemitsu Kosan Co., Ltd., softening point 125°C, density: 1.03 g/m³(20°C)), added with 1 mass part of antioxidant (brand name: IRGANOX 1010 manufactured by Ciba Specialty Chemicals K.K.) were churned and mixed. Then, the mixture was melted and mixed at 180°C by a biaxial extruder; was subjected to extrusion through water-cooled strand; and was cut and granulated.

Material 2: 40 mass % of polystyrene-polyisoprene block copolymer (brand name: Quintac 3520, manufactured by ZEON Corporation, MFR = 7/10min (200°C, 5kg), density: 0.93) added with 60 mass % of process oil (brand name: Dyana Process Oil PW-90, manufactured by Idemitsu Kosan Co., Ltd., density: 0.8722 g/m³ (15°C)) was churned and mixed; was subsequently melted and mixed at 180°C by a biaxial extruder; was subjected to extrusion through water-cooled strand; and was cut and granulated. 0.2 mass parts of talc powder was externally applied to a granulated product in order to avoid blocking of particles while being stocked.

Material 3: styrene rubber blockcopolymer (brand name: Quintac SL-125, manufactured by ZEON Corporation, MFR=17g/10min (200°C, 5kg), density: 0.93).

### Comparative 1

A fastener tape was molded by a deformed extruder and attached to an inner surface of a bag body for producing a packaging bag. The fastener tape was made of the resin used in Example 1.

### Evaluation of Adhesion Strength

Adhesion strength was evaluated. A heat-seal portion of the multilayered tape was cut orthogonally to the heat-seal portion to have 15 mm width. Then, adhesion strength of an opening-side and a content-side of the heat-seal portion were measured by a digital force gauge MODEL-DPSII manufactured by IMADA CO., LTD. Typically, the adhesion strength is required to have 23N/15mm or more to exhibit sealing performance and have 12N/15mm or less to exhibit easy-openability.
In Example 2, the adhesion strength for re-sealing was also similarly evaluated. Typically, the sealing performance for re-sealing is approximately 4N/15mm.

### Evaluation of Produced Bag

150 g of a commercially-available retort curry was put and sealed, and was subjected to retort treatment with constant pressure of 0.2 MPa and hot water at 120 degrees C for 30 minutes.
Table 1 shows results of the evaluation.

**Table 1**

| | Adhesion Strength (N/15mm) | | |
|---|---|---|---|
| | Opening-Side (Easy-Openability) | Content-Side (Sealing Performance) | Produced Bag |
| Example 1 | 8 | 23 | not leaked |
| Example 2 (Unopened) | 10 | 25 | not leaked |
| Example 3 (Re-sealed) | 4 | 10 | - |
| Comparative 1 | - | - | leaked |

The adhesion strength at the content-side when the packaging bag was unopened in Examples 1 and 2 was 23N/15mm or more, thus exhibiting sufficient sealing performance. The retort curry contained in the produced bag was not leaked to the engagement portion of the fastener tape and thus the fastener tape after being opened was maintained clean.
Further, the adhesion strength at the opening-side when the packaging bag was unopened in Examples 1 and 2 was 12N/15mm or less, thus exhibiting easy-openability.
In Example 2, the adhesion strength when the packaging bag was re-sealed was 10N/15mm, thus exhibiting extremely strong re-sealing strength.
In Comparative 1, the contents seeped into the engagement portion of the fastener tape, thus contaminating the fastener tape after being opened.

### Industrial Applicability

The invention is applicable for a packaging bag for foods or medicines.

## Claims

1. A multilayered tape in which a plurality of layers are layered, the multilayered tape being sealed between inner surfaces of a packaging body to provide a seal portion, the multilayered tape comprising:
at least two layers of a first surface layer and a second surface layer to provide a surface of the multilayered tape, wherein
either one of the first surface layer and the second surface layer has nonuniform thickness in a cross sectional direction of the multilayered tape at the seal portion and has a portion that is easily split or peeled and a portion that is not easily split or peeled, and the surface of the multilayered tape is approximately flat at the seal portion.

2. The multilayered tape according to claim 1, wherein
the portion that is easily split or peeled is thin, and the portion that is not easily split or peeled is thick.

3. The multilayered tape according to claim 1 or 2, wherein
the portion that is easily split or peeled is provided at a boundary between the one of the first and second surface layers and a layer adjacent to the one of the first and second surface layers.

4. The multilayered tape according to any one of claims 1 to 3, wherein
the seal portion includes an opening-side end that is in contact with the portion that is easily split or peeled and a content-side end that is in contact with the portion that is not easily split or peeled.

5. The multilayered tape according to any one of claims 1 to 4, wherein
an intermediate layer made of resin different from resin used for the first surface layer and the second surface layer is provided between the first surface layer and the second surface layer.

6. The multilayered tape according to claim 5, wherein
the intermediate layer is made of adhesive resin mainly composed of styrene elastomer, tackifier resin and plasticizer.

7. The multilayered tape according to any one of claims 1 to 6, wherein
an end of the intermediate layer is not exposed to the content-side in cross section of the multilayered tape when the multilayered tape is attached to a packaging body.

8. The multilayered tape according to any one of claims 1 to 7, wherein
a fastener tape includes a pair of a male member and a female member each of which is connected to a belt-shaped base, and the multilayered tape is connected to either one of the pair of the male member and the female member.

9. A manufacturing method of the multilayered tape according to any one of claims 1 to 8, comprising manufacturing the multilayered tape by deformed co-extrusion.

10. A packaging body on which the multilayered tape according to any one of claims 1 to 8 is attached to the inner surfaces of the packaging body, the inner surfaces opposite to each other.

11. The packaging body according to claim 10, wherein
a fastener tape is attached to the inner surfaces of the packaging body closer to an opening-side than the multilayered tape is.
